# EUROPEAN PATENT APPLICATION

(11) **EP 3 258 061 A1**
(43) Date of publication of application: **20.12.2017**
(21) Application number: 16290108.6
(22) Date of filing: 15.06.2016
(51) Int. Cl.: E21B 47/00

(54) **SYSTEM AND METHOD FOR PREDICTION OF A COMPONENT FAILURE**

(71) Applicant: Services Pétroliers Schlumberger, 75007 Paris (FR); Schlumberger Technology B.V., 2514 JG The Hague (NL)
(72) Inventor: Mosallam, Ahmed, 92140 Clamart (FR); Laval, Laurent, 92140 Clamart (FR); Haddad, Gilbert, 92140 Clamart (FR)
(74) Representative: Leonori, Céline

(57) **Abstract**

The disclosure relates to a method for predicting a failure of at least a component of a tool for performing at least an operation associated to a wellbore comprising:
a) measuring a plurality of parameters of the component over time using at least one sensor,
b) selecting a measurement time window;
c) statistically processing measurement signals of each of the plurality of parameters during the measurement time window for deriving one residual signal representative of the plurality of parameters over time,
d) computing a value of at least a health indicator for the measurement time window from at least a statistical variable relative to the residual signal,
e) predicting a failure of the component based at least on the health indicator.

## Description

### BACKGROUND

The disclosure relates generally to predictive maintenance and a method for determining if a component is about to fail in operation. It is applicable in particular in the oil & gas field.

When performing an operation in a wellbore, tools are indeed subjected to extreme conditions such as high temperature and pressure and failures of at least one component of the tool may happen more frequently than in other fields of technology. When such failure occurs, the performance of the operation may be challenged, ie provide inaccurate results, be delayed until the tool is repaired or cancelled. This leads to non-productive time on the rig and financial losses.

In view of the above, it has been sought to predict the future failure of a component of a tool such as a downhole tool. Therefore, critical components of the tool are provided with sensors for measuring a plurality of parameters relative to the component and data coming from the sensors are analyzed. However a reliable prediction is extremely difficult to achieve from this analysis in view of the amount of data associated to each component and coming from different sources that needs to be examined. Further, the data analysis takes time and may not always be performed at the wellsite and/or in between consecutive runs of the tool.

### SUMMARY

The disclosure relates to a method for predicting a failure of a component of a tool for performing at least an operation associated to a wellbore comprising :
a) measuring a plurality of parameters of the component over time using sensors,
b) selecting a measurement time window;
c) statiscally processing measurement signals of each of the plurality of parameters during the measurement time window for deriving one residual signal representative of the plurality of parameters over time,
d) computing a value of a health indicator for the measurement time window from a statistical variable relative to the residual signal,
f) predicting a failure of the component based on the health indicator.

This method output is then a simple test that, once calibrated, may be performed or controlled by any non-qualified personnel, directly on-site, and gives a quick indication on the need of maintenance before the next run of the tool. It therefore decreases the number of failures of the tool during any operation without costing time or money.

Of course, even though the method is described in relationship with and has been created for downhole, it may apply to any component in the oil and gas field, such as surface tools or components and/or to any component, for instance any component comprising electronics.

The disclosure also relates to a system for predicting a failure of at least a component of a tool for performing at least an operation associated to a wellbore comprising sensors for measuring a plurality of parameters of the component over time, a memory for storing the measurement values obtained from the sensor associated with a time of the measurement, and a processor configured to select a measurement time window, statistically process measurement signals of each of the plurality of parameters over time during the measurement time window, for deriving one residual signal representative of the plurality of parameters over time, obtaining a value of a health indicator for the measurement time window based on a statistical variable of the residual signal, and predicting a failure of the component based at least on the health indicator.

### BRIEF DESCRIPTION OF THE DRAWINGS

Various aspects of this disclosure may be better understood upon reading the following detailed description and upon reference to the drawings in which:
FIG. 1 is a schematic view of a logging-while-drilling downhole tool according to one embodiment of the disclosure,
FIG. 2 is a flow diagram of a method according to an embodiment of the disclosure;
FIG. 3 is a flow diagram of a method according to another embodiment of the disclosure
FIG. 4 is an example of measurement signals obtained from a component of a tool;
FIG .5 is an example of a residual signals computed from the measurement signals of FIG. 4 according to the method of FIG. 3,
FIG. 6 is an example of trends computed from the residual signals of FIG. 5 according to the method of FIG. 3,
FIG. 7 is an example of health indicators determined based on the trends of FIG. 6 according to the method of FIG. 3,

### DETAILED DESCRIPTION

One or more specific embodiments of the present disclosure will be described below. These described embodiments are examples of the presently disclosed techniques. Additionally, in an effort to provide a concise description of these embodiments, some features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would still be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.'

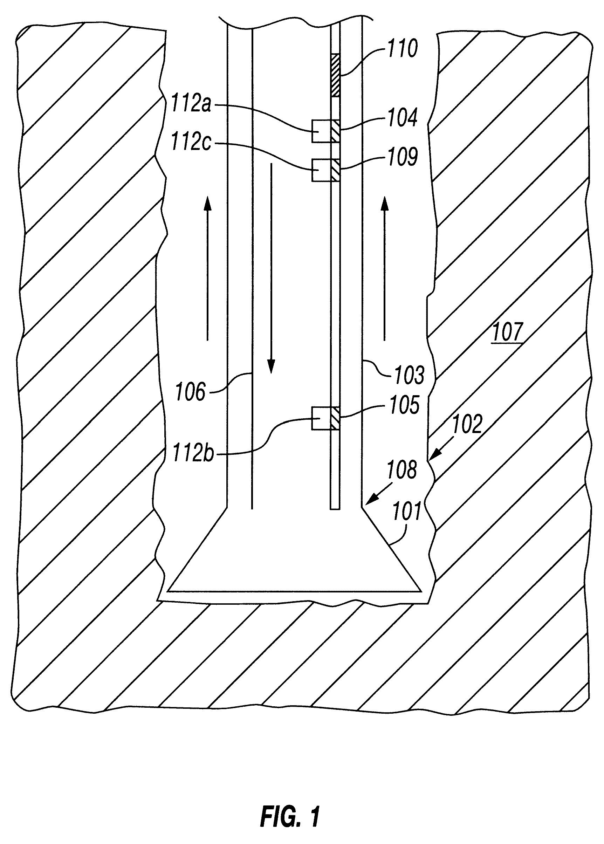

FIG. 1 shows an example of a downhole assembly 100 on which the prediction method of the disclosure may be applied. In this embodiment, the downhole assembly 100 is a gamma-ray logging tool used to provide information about the formation surrounding a drilled portion of the borehole as soon as possible while drilling. This assembly 100 comprises a drill bit 101 at an end of a drill string 103. The drill string 103 is used to drill a borehole 102. Logging tools (104, 105, 109) are disposed within the drill string 103, so as to allow a drilling mud to be carried through a mud channel 106. The drilling mud is pumped down from the surface to the drill bit 101, where it helps clear cuttings and bring them to the surface through an annulus between the drill string 103 and a formation 107.

One of the logging tools (104, 105, 109) may contain a neutron generator 104 that irradiates the formation 107 with high energy neutrons, so as to provide a mapping of the porosity of the formation 107 for instance. Such generator may be a pulsed neutron generator. A gamma-ray detector 109 may be provided close to the neutron generator to measure gamma-rays induced by the generated neutrons. Furthermore, a gamma-ray detector 105 may measure the natural gamma-ray activity of the formation 107.

The measurement taken downhole are transmitted on a downhole computer 110 comprising a memory storing the data obtained from the sensors and a processor for processing the obtained measurement. All or part of the processed information obtained from the measurements may be transmitted to a telemetry system (not shown) for communicating with the surface. Such telemetry system may be a mud pulse telemetry. Alternatively the information may be retrieved from the computer when the downhole tool is brought back to the surface or the measurement may be sent to the surface via telemetry and processed by a processor situated at the surface, at the wellsite or remotely.

The downhole assembly 100 therefore comprises at least four components, ie the neutron generator 104, the gamma-ray detector 109, the gamma-ray detector 105 and the downhole computer 110. All or part of these components may need to be monitored in order to check if they need maintenance and to predict when this maintenance is needed. In this embodiment, we will consider that the neutron generator 104 and both the gamma-ray detectors 105 and 109 may be monitored for maintenance.

The downhole assembly then comprises a sensor module 112A, 112B, 112C relative to each of the generator 104 and the detectors 105, 109. The sensor module comprises one or several sensors for monitoring a plurality of parameters of the component, such as electrical parameters, mechanical or physical parameters. Some of the parameter may also be output by the component itself.

For instance; considering the gamma-ray detector 105 or 109, the physical parameters may comprise a count rate, and/or a gain and/or a form factor. For the neutron generator, the physical parameters may comprise a neutron count rate. Other physical parameters may be a temperature, a humidity level, etc. For each of the neutron generator 104 and the gamma-ray detectors, the electrical parameters may comprise a current, a voltage, a power, an impedance, etc. A mechanical parameter, not tested for the above-mentioned components, may comprise a force, a pressure, a strain, a torque, a tension module, an elasticity coefficient, a speed, etc.

The computer 110 may store the data obtained from the sensor modules 112A-112C. It may also comprise a processor for performing a method according to the disclosure. Alternatively, the data may be transmitted uphole via the telemetry or recovered at the surface when the tool has finished its operation and is brought out of the borehole. Then a processor situated at the surface, on site or remotely, may perform the method according to the disclosure.

In the example of FIG. 1, the tool is a LWD (logging-while-drilling) having specific components. However, the components (detectors, etc.) of the LWD tool may be monitored even though they are not the ones presented here. Plus, the method may be applied to any tool such as a MWD (measurement while drilling) tool or to any other downhole tool, conveyed for instance on a wireline, a slickline or a coiled tubing as well as any surface tool.

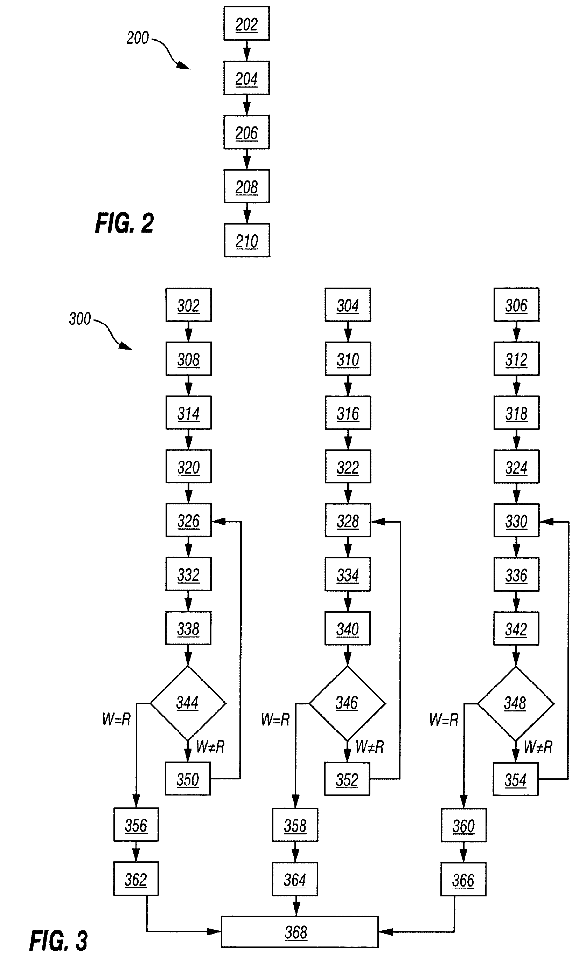

A method according to an embodiment of the disclosure to predict the failure of a component will now be described in reference to FIG. 2. The method 200 includes measuring over time (block 202) a plurality of parameters relative to the component with one or more sensors. As indicated hereinabove, the measured data are stored in the computer 110 associated with a time so that the measured signals may be recovered easily. The method then includes, for instance once the tool has finished a run and is brought uphole, selecting a measurement time window (block 204) and for this time window statistically processing the measurement signals of each of the plurality of parameters during the measurement time window for deriving one residual signal representative of the plurality of parameters over time (block 206). This operation enables to obtain from a plurality of measurement signals ie only one signal still comprising the main information carried by all of the measurement signals. A value of at least an health indicator is then computed (block 208) from at least a statistical variable of the residual signal. This health indicator is representative of the health state of the entire component based on the monitored parameters. The method then comprises predicting a failure of the component at least in view of the computed health indicator (block 210 Predicting a failure may comprise predicting when the failure will happen or simply determining if the tool can perform one more run without failure.

Another embodiment of the method according to the disclosure will be explained with reference to FIG. 3. This method is applied to the downhole assembly 100.

The method of FIG. 3 also comprises measuring a plurality of parameters relative each of the components 104, 105, 109 with the respective sensor modules 112A-112C (blocks 302, 304, 306). These measurements are performed simultaneously while the assembly operates in the borehole. As indicated before, they are stored in the computer 110. Once the run of the tool is over, the method comprises selecting for each of the components 104, 105, 109 the parameters that may be significant in terms of failure (blocks 308, 310 & 312). These parameters may be, selected on a case by case basis, for instance depending on the type of measurements acquired during the run, or the duration of the run or the properties of the borehole or formation surrounding it. Alternately, they may be predetermined depending on the type of the component. All the parameters that are measured may also be taken into account in the following operations of the method, the operations of blocks 308, 310 & 312 being optional.

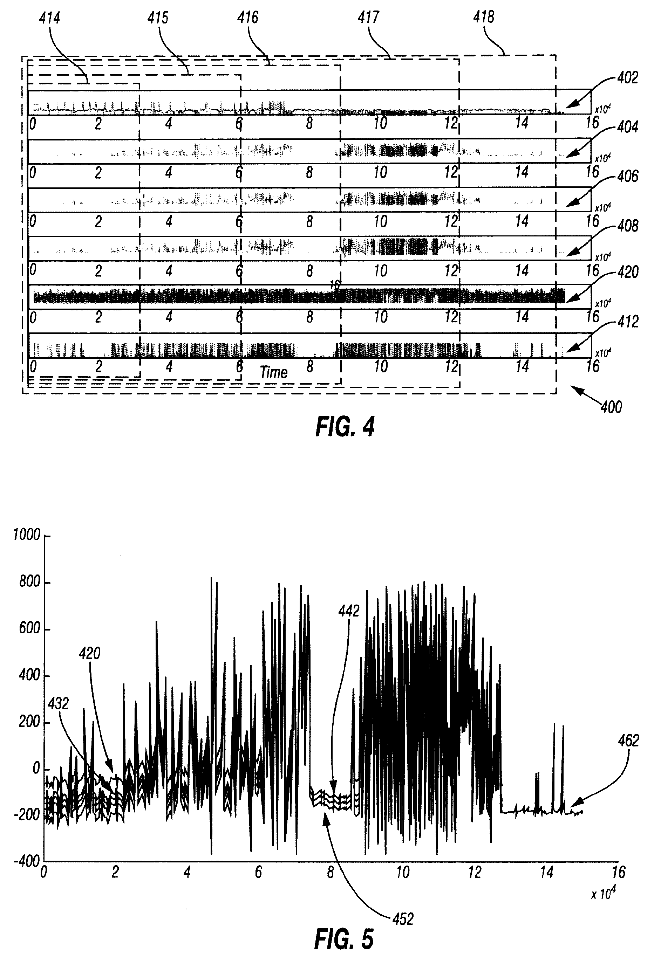

These measurement signals are then filtered (blocks 314, 316, 318) to remove the noise and inconsistent values of the measurements signals. In order to do so, any appropriate filtering method may be used. One or more filtering methods may be applied to each of the signals. The filtering method(s) may be specific to each type of measurement signals or the same methods may be applied to all of the measurement signals. FIG.4 shows a set 400 of 6 measured signals 402-412 obtained from the sensors relative to a component.

The method then includes selecting an initial time window for each of the component (blocks 320, 322, 324). The initial time window may be of a predetermined duration or its duration may be determined on a case by case basis in view of the duration of the last run for instance. The duration of the time window may not be identical for each of the tools. A first time window 414 is shown on FIG. 4. It starts with the beginning of the run for the tool but any other appropriate starting time may be chosen.

For each component, the method then comprises statistically processing the measurement signals of each of the plurality of parameters during the measurement time window for deriving one residual signal representative of the plurality of parameters over time (blocks 326, 328 & 330). The statistical processing of the measured signals may be performed using any appropriate statistical method for reducing the dimensionality of a set of data. In an embodiment of the disclosure, the principle component analysis (PCA) method is used. This method is already known in the art and includes obtaining a covariance matrix of a dataset centered, on 0 and based on the measured signals relative to a component and then deriving from this covariance matrix eigenvectors of the matrix associated with eigenvalues. The residual signal over time is obtained from the eigenvector having the highest eigenvalue, by projection of this vector. A residual signal 420 relative to the first time window derived from the six measurements signals 402-412 of FIG. 4 may be seen on FIG. 5.

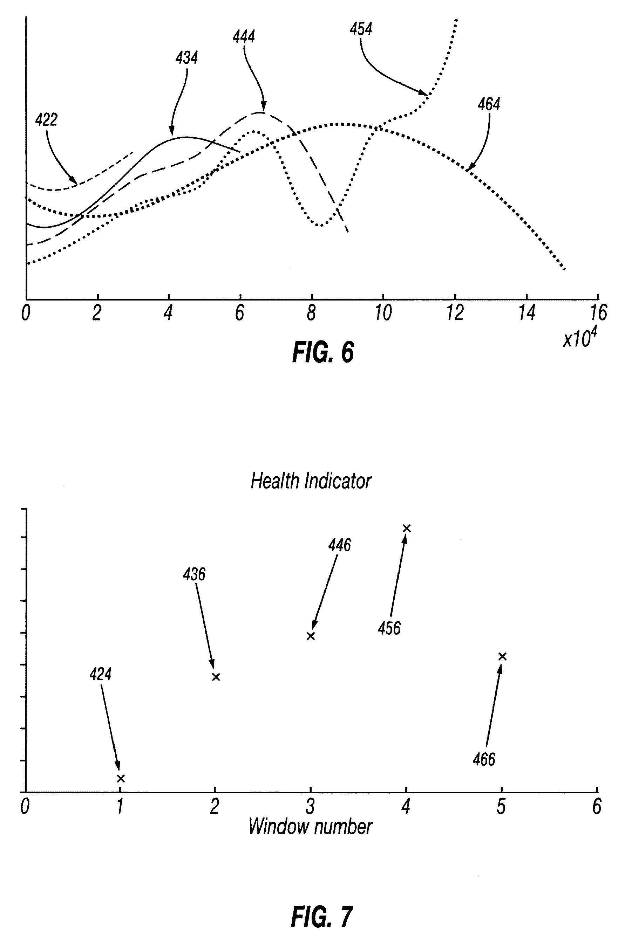

As can be seen on FIG. 5, this signal shows a high level of oscillation and noise and it may relatively difficult to extract from this residual signal as such information relative to the health of the tool. These local oscillations do not give any information relative to the health evolution of the tool over time. The method may then comprise performing a trend extraction on the residual signal in order to obtain from the residual signal of the PCA analysis a trend of the residual signal (blocks 332, 334 & 336).This trend extraction may be performed by any appropriate method. In an embodiment, this trend extraction comprises finding local maxima and minima of the residual signal and computing respectively from the maxima and minima an upper and a lower envelope. It comprises then performing an empirical mode decomposition in order to determine the intrinsic mode functions of the signal and then from these intrinsic mode functions, generating a modified residual signal that is a constant or a trend. A trend 422 obtained from the residual signal 420 for the first time window 414 is shown on FIG. 6.

When the trend is obtained, the method includes computing a value of a health indicator for the measurement time window from a statistical variable relative to the residual signal (blocks 338, 340 and 342). This operation may comprise calculating the variance of the trend 422, the value of the health indicator corresponding to the variance of the trend 422 for the first time window. In this embodiment, the health indicator relies on the variance but it can rely on any appropriate statistical indicator, such as the average and/or axis intersection and/or the slope, etc. FIG. 7 shows an health indicator 424 calculated from the trend 422 for the first time window. Operations 338, 340, 342 may also include calculating several health indicators corresponding to several statistical variables.

Once the health indicator or health indicators are calculated, a test is performed in order to verify if the time window corresponds to the whole run during which the tool was in operation (block 344, 346 & 348). If the time window does not correspond to the whole run, a subsequent time window is selected, the subsequent time window comprising the current time window (blocks 350, 352 & 354). Here, a second time window is selected comprising the first time window and an additional time period. Second time window 415 is shown on FIG. 4. The duration of the second time window may be selected depending on the duration of the first time window, on the duration of the run or may be of a predetermined duration. It may also be determined depending on any parameter relative to the component. When the second time window has been selected, the method repeats the operations 326, 332, 338, 344 for the first component, 328, 334, 340, 346 for the second component and 330, 336, 342, 348 for the third component. These operations are therefore iterately repeated.

FIG 5, 6 and 7 show respectively residual signals, trends and health indicators for different time windows. In particular,
- the residual signal 432, trend 434 and health indicator 436 are associated to the second time window 415,
- the residual signal 442, trend 444 and health indicator 446 are associated to the third time window 416,
- the residual signal 452, trend 454 and health indicator 456 are associated to the fourth time window 417,
- the residual signal 462, trend 464 and health indicator 466 are associated to the fifth time window 418.

If it is determined at block 344, 346 or 348 that the current time window covers the entire run, the method then comprises plotting the health indicator versus time (as represented on FIG. 7) for each component (blocks 356, 358, 360) and determining a failure of each of the components (blocks 362, 364, 366). From these operations, a failure of the tool is determined (block 368). It will be determined that the tool will fail if one of its components fail.

Determining the failure of the tool may correspond to determine if the tool may perform an additional run, ie if any of the component will fail at the next run. Alternatively, determining the failure of the tool may correspond to analyzing the evolution of the health indicator during the last run in view of the predetermined threshold, ie how fast the health indicator plot comes close to the threshold, and/or analyzing the health indicator plots in view of the threshold for the same tool during several previous runs. Such operation may be relied upon in order to determine the remaining lifetime of the tool.

In an embodiment, determining the failure of a component includes comparing one or more health indicators to at least a predetermined threshold (the health indicator may be under or over a certain threshold or in a range, in which case they are compared to at least two thresholds). The predetermined threshold is determined from a calibration operation in which health indicators of several tools that have failed for different reasons have been determined and/or from simulations. Therefore, determining the failure of the tool may simply comprise determining if a number of health indicators (associated with different time windows) taken during the run are in a predetermined range (for instance, if 10 points of the health indicator plot are over the threshold for the first component or if one point, in particular the last point, of the health indicator plot is below the threshold for the second component). When several health indicators are computed, the comparison may comprise comparing each of the health indicator with one or two predetermined thresholds and determining the status of the tool based on the plurality of comparisons. This operation is really simple and may enable to non-qualified personnel to obtain quick and accurate information on the next operation of the tool.

In another embodiment, determining the failure of a component may include taking the health indicator plot as an input to a mathematical model that will output a value representative of the status of the tool (such status being for instance at least "fail" or "not fail" but may include other status). Such model may for instance be a decision classification tree. It is built and calibrated based on tools for which health indicators after a run and status after this run are known. When several health indicators are determined for a same component, the plots of the plurality of health indicators may be an input to the model.

When it is determined that the tool will fail, a decision relative to the tool may be taken (block 366) such as sending the tool to maintenance or order a new tool as a replacement. On the contrary, when it is determined that the tool will not fail during the next run, the tool remains available for the normal operations.

It is also noted that the plots obtained at block 352, 354, 356 may be sent to a file storing the data relative to the tool (block 368). These data may be taken into account in order to dynamically calibrate the threshold or model. For instance, the threshold for each component may be changed in view of the health indicators during the run and the status of the tool at the end of the run in the first embodiment. For instance, if a tool has failed whereas its health indicator during this run or the previous one was considered normal, the value of the threshold may be modified. In the second embodiment, knowing the status of the tool and its health indicators, it can be used to further calibrate the model. This operation is optional and the thresholds or models may of course remain the same once calibrated.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The disclosure relates generally to a method for predicting a failure of at least a component of a tool for performing at least an operation associated to a wellbore comprising:
a) measuring a plurality of parameters of the component over time using at least one sensor,
b) selecting a measurement time window;
c) statistically processing measurement signals of each of the plurality of parameters during the measurement time window for deriving one residual signal representative of the plurality of parameters over time,
d) computing a value of a health indicator for the measurement time window from a statistical variable relative to the residual signal,
f) predicting a failure of the component based at least on the health indicator.

The method may also comprise taking a decision relative to the maintenance of the component based on the prediction.

The method may also include iteratively performing b)-d) wherein a measurement time window at an iteration includes the measurement time window of the previous iteration. In particular, for a predetermined run of the tool in the wellbore, iterations may be repeated until the duration of the time window corresponds to the duration of a run

The method may also include plotting the health indicator over time during the run and predicting the failure in view of the plot.

In a first embodiment, predicting the failure of the component includes inputting the plot in a predetermined mathematical model wherein the mathematical model is calibrated so that its output is a value representative of a status of the tool. The mathematical model may for instance include the mathematical model includes a decision classification tree.

In a second embodiment, predicting the failure of the component includes comparing the health indicator for at least the measurement time window with at least a predetermined threshold. The comparison may be done for a plurality of measurement time windows.

The method may include comparing the health indicator plots of a plurality of runs of the component and determining the remaining lifetime of the component based on the plots.

The method may also include determining the thresholds or mathematical model experimentally based on failures of similar components. In particular the method may comprise computing an updated threshold value based on a previous threshold value and a value of at least an health indicator of the component determined at d), in particular after a run or when the component fails in the second embodiment. In the first embodiment, it may comprise computing new mathematical model based on a previous model and at least a value of an health indicator of the component determined at e), in particular after a run or when the component fails. It enables to make the prediction more accurate for future tools based on the experience of the tool behavior.

The component may be one of the following :
- A neutron generator, and/or
- X-ray generator and/or
- A gamma-ray detector, and/or
- Neutron detector, and/or
- A battery

At least a parameter of the plurality may be one of the following :
- An electrical parameter, such as a current, a voltage, or an impedance,
- A physical parameter, such as a count rate, a gain, a form factor, a resolution, a noise level, a temperature,
- A mechanical parameter, such as a speed, a force, a pressure, a torque, a shock, a vibration.

The method may include filtering at least one of the measurement signals before the statistical processing.

It may also include selecting a subset of a set of parameters of the components measured over time before the statistical processing, the plurality of parameters constituting the subset.

The method may also include performing a trend extraction on the residual signal and obtaining the health indicator from the trend of the residual signal.

The statistical processing comprise using a principal component analysis (PCA). The principal component analysis may comprise determining eigenvectors associated with eigenvalue on the basis of a covariance matrix relative to the measured signals, and obtaining the residual signal may comprise using the eigenvector associated to the highest eigenvalue.

The statistical variable used for determining the health indicator may be a variance, an average, a slope, or an intersection of the signal with the vertical axis. It may be noted that for a same component several health indicators may be computed from different statistical variable. When several health indicators are computed, the failure may be determined based on several health indicators.

The method may include predicting the failure of at least two components of the tool and predicting the failure of the tool based on the prediction obtained for said components.

The tool may be a downhole tool intended to be lowered in the wellbore. Alternatively, it may be a surface tool at the wellsite. When intended to be run downhole, it may a logging while drilling (LWD) tool, a measurement while drilling (MWD) tool, a wireline tool or a tool that may be conveyed via coiled tubing or slickline for instance

The disclosure also generally relates to a system for predicting a failure of at least a component of a tool for performing at least an operation associated to a wellbore comprising:
- at least one sensor for measuring a plurality of parameters of the component over time,
- a memory for storing the measurement values obtained from the sensor associated with a time of the measurement,
- a processor configured to :
   * select at least a measurement time window
   * statistically process,, measurement signals of each of the plurality of parameters over time during the measurement time window,for deriving one residual signal representative of the plurality of parameters over time,
   * obtaining a value of a health indicator for the measurement time window based on a statistical variable of the residual signal,
   * predict a failure of the component based at least on the health indicator.

## Claims

1. Method for predicting a failure of at least a component of a tool for performing at least an operation associated to a wellbore comprising :
a) measuring a plurality of parameters of the component over time using at least one sensor,
b) selecting a measurement time window;
c) statistically processing measurement signals of each of the plurality of parameters during the measurement time window for deriving one residual signal representative of the plurality of parameters over time,
d) computing a value of at least a health indicator for the measurement time window from at least a statistical variable relative to the residual signal,
e) predicting a failure of the component based at least on the health indicator.

2. Method according to any of the preceding claims, comprising taking a decision relative to the maintenance of the component based on the prediction.

3. Method according to any of the preceding claims, comprising iteratively performing b)-d) wherein a measurement time window at an iteration includes the measurement time window of the previous iteration.

4. Method according to the preceding claim, wherein, for a predetermined run of the tool in the wellbore, iterations are repeated until the duration of the time window corresponds to the duration of a run.

5. Method according to the preceding claims, comprising plotting the health indicator over time during the run and predicting the failure in view of the plot.

6. Method according to the preceding claim, wherein predicting the failure of the component includes inputting the plot in a predetermined mathematical model wherein the mathematical model is calibrated so that its output is a value representative of a status of the tool.

7. Method according to any of claims 1-5, wherein predicting the failure of the component includes comparing the health indicator for the measurement time window with at least a predetermined threshold.

8. Method according to any of the preceding claims, wherein the component is one of the following:
- A neutron generator, and/or
- X-ray generator and/or
- A gamma-ray detector, and/or
- Neutron detector, and/or
- A battery

9. Method according to any of the preceding claims, wherein at least one parameter of the plurality is one of the following :
- An electrical parameter, such as a current, a voltage, or an impedance,
- A physical parameter, such as a count rate, a gain, a form factor, a resolution, a noise level, a temperature,
- A mechanical parameter, such as a speed, a force, a pressure, a torque, a shock, a vibration.

10. Method according to any of the preceding claims, comprising filtering at least one of the measurement signals before the statistical processing.

11. Method according to any of the preceding claims, comprising performing a trend extraction on the residual signal and obtaining the health indicator from the trend of the residual signal.

12. Method according to any of the preceding claims, wherein the statistical processing comprise using a principal component analysis (PCA).

13. Method according to any of the preceding claims, wherein at d) a plurality of health indicators based on a plurality of statistical variables are determined.

14. Method according to any of the preceding claims, wherein the tool is a downhole tool intended to be lowered in the wellbore.

15. System for predicting a failure of at least a component of a tool for performing at least an operation associated to a wellbore comprising :
- at least one sensor for measuring a plurality of parameters of the component over time,
- a memory for storing the measurement values obtained from the sensor associated with a time of the measurement,
- a processor configured to :
* select at least a measurement time window
* statistically process, , measurement signals of each of the plurality of parameters over time during the measurement time window,for deriving one residual signal representative of the plurality of parameters over time,
* obtaining a value of a health indicator for the measurement time window based on a statistical variable of the residual signal,
* predict a failure of the component based at least on the health indicator.
